# EUROPÄISCHE PATENTANMELDUNG

(11) **EP 4 672 501 A1**
(43) Veröffentlichungstag der Anmeldung: **31.12.2025**
(21) Anmeldenummer: 25183174.9
(22) Anmeldetag: 17.06.2025
(51) Int. Cl.: H01Q 3/01, H01Q 3/20, H01Q 3/46, H01Q 15/14, H01Q 1/24, H04B 7/145

(54) **REFLEKTORANORDNUNG ZUM REFLEKTIEREN EINES FUNKSIGNALS**

(30) Priorität: 25.06.2024 DE 102024117919
(71) Anmelder: Technische Universität Dortmund, Körperschaft des Öffentlichen Rechts, 44227 Dortmund (DE)
(72) Erfinder: Wietfeld, Christian, 44229 Dortmund (DE); Böcker, Stefan, 44137 Dortmund (DE); Häger, Simon, 44139 Dortmund (DE)
(74) Vertreter: Michalski Hüttermann & Partner Patentanwälte mbB

(57) **Zusammenfassung**

Die Erfindung betrifft eine Reflektoranordnung (1), zum Reflektieren eines Funksignals (2), mit einer Mehrzahl von nebeneinander angeordneten Reflektorelementen (3), die jeweils eine Reflexionsfläche (4) und von denen wenigstens ein Teil jeweils eine Verstelleinrichtung (5) aufweisen, wobei eine jeweilige Reflexionsfläche (4) so ausgestaltet ist, dass ein aus einer Einfallsrichtung einfallendes Funksignal (2) in einen Ausfallsrichtungsbereich reflektiert wird, und eine jeweilige Verstelleinrichtung (5) derart an eine jeweilige Reflexionsfläche (4) angekoppelt ist, dass mit der Verstelleinrichtung (5) die Orientierung der Reflexionsfläche (4) reversibel derart veränderbar ist, dass das aus der Einfallsrichtung einfallende Funksignal (2) je nach Orientierung der Reflexionsfläche (4) jeweils in einen anderen Ausfallsrichtungsbereich reflektiert wird. Auf diese Weise wird eine Vorrichtung zur Weiterleitung eines Funksignals bereitgestellt, mit der eine effiziente Reichweitenerhöhung des Funksignals ermöglicht wird.

## Beschreibung

Die Erfindung betrifft eine Reflektoranordnung, zum Reflektieren eines Funksignals, mit einer Mehrzahl von nebeneinander angeordneten Reflektorelementen, die jeweils eine Reflexionsfläche aufweisen, wobei eine jeweilige Reflexionsfläche so ausgestaltet ist, dass ein aus einer Einfallsrichtung einfallendes Funksignal in einen Ausfallsrichtungsbereich reflektiert wird.

Herkömmliche Funknetze, wie Mobilfunknetze, nutzen unter anderem elektronisch nachführbare Antennen, die mit Hilfe der Beam-Forming-Technik in der Lage sind, die auf der Basis von Antennen-Arrays die Ausstrahlcharakteristik einer Antenne dynamisch so auszurichten, dass eine bedarfsgerechte Funkversorgung am Ort eines mobilen Endgeräts erfolgt. Innerhalb eines mit dem Funksignal zu versorgenden Bereichs entstehen auf Grund diverser Störfaktoren, wie beispielsweise hoher Gebäude oder Bäume, häufig schlecht funktechnisch versorgte Bereiche, in denen kein Funksignal oder das Funksignal nur schlecht empfangen werden kann.

Um diese funktechnisch schlecht versorgten Bereiche dennoch zuverlässig abdecken zu können, werden in der Regel zusätzliche Antennen oder Repeater eingesetzt, die das Funksignal empfangen, verstärken und neu aussenden. Diese Herangehensweise hat jedoch den Nachteil, dass die zusätzlichen Bauteile, wie Antennen oder Repeater, eine eigene permanente Stromversorgung benötigen und dadurch die Netzplanung komplexer wird, da auf eine ausreichende Stromversorgung beim Positionieren der Antennen oder Repeater geachtet werden muss. Auf Grund ihrer Größe und optischen Erscheinung lassen sie sich zudem schlecht in ein Stadtbild integrieren, sodass zusätzliche Antennen oder Repeater nicht nur eine komplexere Netzplanung begründen, sondern auch als störend wahrgenommen werden. Nicht selten erheben Anwohner im direkten Umfeld einer geplanten oder bestehenden Antennenanlage eine Beschwerde aus Angst vor gesundheitlichen Beeinträchtigungen wegen der Strahlung oder um ein ansehnliches Stadtbild nicht zu verschlechtern.

Darüber hinaus sind sogenannte Reconfigurable Intelligent Surfaces (RIS) bekannt, die darauf abzielen, die Übertragung von Funksignalen dynamisch und zielgerichtet zu steuern. Technisch gesehen handelt es sich bei RIS um planare Oberflächen, die aus vielen einzelnen Zellen, sogenannten Unit-Cells, bestehen. Diese Zellen können ihre Eigenschaften so verändern, dass sie einfallende drahtlose Signale in vielfältiger Weise beeinflussen. Dazu gehören die Reflexion, bei der das Signal in eine bestimmte Richtung zurückgeworfen wird, die Brechung, bei der das Signal einen neuen Pfad nimmt, die Fokussierung, bei der das Signal auf einen bestimmten Punkt gebündelt wird, die Kollimation, bei der das Signal in eine parallele Ausrichtung gebracht wird, die Modulation, bei der die Signalparameter gezielt verändert werden, und die Absorption, bei der das Signal teilweise oder vollständig absorbiert wird.

RIS können sowohl im Innen- als auch im Außenbereich eingesetzt werden, beispielsweise in Büros, Flughäfen, Einkaufszentren, an Straßenlaternen oder auf Werbetafeln. Sie können im Grunde jede beliebige Form annehmen und in verschiedene Objekte integriert werden, was sie zu einer sehr flexiblen Technologie macht. Ein weiterer wichtiger technischer Aspekt von RIS ist ihr potenziell geringer Energieverbrauch. Diese Technologie kann in verschiedenen Teilen des Funkspektrums arbeiten, von Frequenzen unter 6 GHz bis hin zu Terahertz (THz). Die Anwendbarkeit für aktuelle und zukünftige Funksysteme ist somit gewährleistet.

In dem Artikel "Mirhamed Mirmozafari, Zongtang Zhang, Meng Gao, Jiahao Zhao, Mohammad Mahdi Honari, John H. Booske und Nader Behdad; Mechanically Reconfigurable, Beam-Scanning Reflectarray and Transmitarray Antennas: A Review; Appl. Sci. 2021, 11, 6890" sind mechanisch rekonfigurierbare Strahlablenkungsantennen, insbesondere Reflectarrays (RAs) und Transmitarrays (TAs) beschrieben. Dort werden die bestehenden Ansätze in drei Hauptkategorien sowie eine Hybridkategorie unterteilt, die mehrere dieser Ansätze kombiniert. Die Leistung der Antennen wird anhand von Parametern wie Apertureffizienz, Gewinn, Bandbreite und Scanbereich verglichen. Moderne Anwendungen, die flexible Scan-Funktionen erfordern, haben das Design agiler Strahlablenkungsantennen zu einem aktiven Forschungsgebiet gemacht. Elektronisch rekonfigurierbare RAs haben schnelle Reaktionszeiten, leiden jedoch unter Amplitudenverlust und Phasenquantisierungsfehlern. Mechanisch rekonfigurierbare RAs bieten eine größere Phasenveränderung, was die Phasenquantisierungsfehler verringert. Der Artikel beschreibt auch Vorteile mechanisch rekonfigurierbarer Antennen gegenüber herkömmlichen und aktiv phasengesteuerten Arrays.

Die DE 10 2022 100 772 A1 beschreibt einen passiver Reflektor zum Reflektieren eines Funksignals, wobei der passive Reflektor als ein flächiges Element mit einer strukturierten Oberfläche ausgestaltet ist, die Oberfläche ein elektrisch leitendes Material aufweist, und die Oberfläche derart strukturiert ist, dass die Oberfläche eine Mehrzahl an Reflexionsflächen aufweist, die jeweils das aus einer ersten Richtung einfallende Funksignal in eine zweite zur ersten Richtung unterschiedlichen Richtung reflektieren, wobei die jeweilige zweite Richtung, in die das Funksignal reflektiert wird, für wenigstens zwei Reflexionsflächen verschieden ist. Auf diese Weise wird es ermöglicht, eine Vorrichtung zum Reflektieren eines Funksignals bereitzustellen, die ohne zusätzliche Stromversorgung funktioniert und auf einfache Weise in ein Stadtbild integriert werden kann.

Ein Nachteil solcher passiver Reflektoren liegt darin, dass sie einen großen Platzbedarf haben, da in der Praxis eine Vielzahl von Oberflächenorientierungen bereitgestellt werden müssen, um entsprechend viele unterschiedliche Reflexionsrichtungen und damit eine Reichweitenerhöhung in im Wesentlichen dem gesamten Raum bereitzustellen. Diese Problematik verschärft sich insbesondere, wenn die Trägerfrequenz des einfallendenden Mobilfunksystem niedrig ist, also eine große Wellenlänge aufweist.

Davon ausgehend ist es die Aufgabe der Erfindung, eine Vorrichtung zur Weiterleitung eines Funksignals bereitzustellen, mit der eine effiziente Reichweitenerhöhung des Funksignals ermöglicht wird.

Diese Aufgabe wird durch den Gegenstand des Patentanspruchs 1 gelöst. Bevorzugte Weiterbildungen finden sich in den Unteransprüchen.

Erfindungsgemäß wird somit eine Reflektoranordnung, zum Reflektieren eines Funksignals, mit einer Mehrzahl von nebeneinander angeordneten Reflektorelementen bereitgestellt, die jeweils eine Reflexionsfläche und von denen wenigstens ein Teil jeweils eine Verstelleinrichtung aufweisen, wobei eine jeweilige Reflexionsfläche so ausgestaltet ist, dass ein aus einer Einfallsrichtung einfallendes Funksignal in einen Ausfallsrichtungsbereich reflektiert wird, und eine jeweilige Verstelleinrichtung derart an eine jeweilige Reflexionsfläche angekoppelt ist, dass mit der Verstelleinrichtung die Orientierung der Reflexionsfläche reversibel derart veränderbar ist, dass das aus der Einfallsrichtung einfallende Funksignal je nach Orientierung der Reflexionsfläche jeweils in einen anderen n reflektiert wird.

Bei den Reflexionsflächen handelt es sich ebenso um passive Reflektoren, wie in der DE 10 2022 100 772 A1 beschrieben. "Passiv" bedeutet vorliegend, dass das Funksignal nicht aktiv manipuliert wird. Der Reflektor funktioniert also ohne das Funksignal aktiv weiterzuleiten. Dementsprechend umfasst der passive Reflektor keine Bauteile, die eine Energieversorgung benötigen. Er funktioniert ohne Anbindung in ein kabelgebundenes Kommunikations- oder Stromnetz. In diesem Zusammenhang ist es bevorzugt, dass die Oberfläche der Reflexionsfläche ein elektrisch leitendes Material aufweist, vorzugsweise in Form einer elektrisch leitenden Beschichtung. Mit dem Begriff "elektrisch leitendes Material" ist ein Material gemeint, dass eine für die vorliegende Anwendung der Reflexion eines Funksignals hinreichend große elektrisch Leitfähigkeit aufweist.

Die erfindungsgemäße Reflektoranordnung zum Reflektieren eines Funksignals weist also eine Mehrzahl nebeneinander angeordneter Reflektorelemente auf, die jeweils eine Reflexionsfläche und eine Verstelleinrichtung aufweisen. Diese Konfiguration bietet mehrere wesentliche Funktionen und Vorteile. Jedes Reflektorelement ist so gestaltet, dass es ein aus einer bestimmten Einfallsrichtung kommendes Funksignal in einen definierten Ausfallsrichtungsbereich reflektiert. Die Reflexionsfläche spielt dabei eine entscheidende Rolle bei der präzisen Steuerung der Signalrichtung. Die Verstelleinrichtung ist an die Reflexionsfläche angekoppelt und ermöglicht eine reversible Veränderung der Orientierung der Reflexionsfläche. Durch diese Verstellbarkeit kann die Richtung, in die das Funksignal reflektiert wird, je nach Bedarf angepasst werden. Dadurch wird eine dynamische Steuerung ermöglicht, die es der Reflektoranordnung erlaubt, flexibel auf unterschiedliche Signalquellen und Empfangsrichtungen zu reagieren.

Diese Verstellbarkeit führt zu einer erhöhten Richtungspräzision, die besonders wichtig für Anwendungen ist, bei denen eine exakte Strahlführung erforderlich ist. Die Flexibilität und Anpassungsfähigkeit der Reflexionsflächen ermöglicht es, die Reflektorelemente an verschiedene Anforderungen anzupassen, wodurch eine vielseitige Nutzung der Reflektoranordnung in unterschiedlichen Anwendungen und Szenarien möglich wird. Die präzise Steuerung der Reflexionsrichtung kann dazu beitragen, unerwünschte Signalverluste und Interferenzen zu reduzieren bzw. zu vermeiden, was zu einer insgesamt höheren Signalqualität führt. Dies ist entscheidend für die Zuverlässigkeit und Effizienz der der Funksignale. Insofern bietet die erfindungsgemäße Reflektoranordnung eine hochpräzise und flexible Lösung zur Reflexion von Funksignalen. Die Möglichkeit, die Orientierung der Reflexionsflächen dynamisch zu verändern, stellt sicher, dass die Reflektoranordnung möglichst optimal an verschiedene Anforderungen und Anwendungen angepasst werden kann.

Die Verstellmöglichkeiten mittels der Verstelleinrichtungen können unterschiedlich sein. Gemäß einer bevorzugten Ausgestaltung der Erfindung ist jedoch wenigstens ein Teil der Verstelleinrichtungen so ausgebildet, dass mit ihnen die an sie jeweils angekoppelte Reflexionsfläche verschiebbar und/oder verschwenkbar ist, so dass ganz besonders bevorzugt dem Grunde nach mittels der Verstelleinrichtungen eine beliebige Orientierung der Reflexionsflächen im Raum erzielbar ist. Die tatsächlich erzielbare Orientierung einer Reflexionsfläche kann freilich dadurch beschränkt sein, dass ihre Bewegung durch angrenzende Einrichtungen, wie insbesondere ein angrenzendes Reflektorelement, limitiert wird.

Diese Ausgestaltung ermöglicht es also, die Reflexionsflächen nahezu beliebig im Raum zu orientieren. Dadurch kann die Reflexionsrichtung der Funksignale präzise und flexibel angepasst werden, was besonders in Anwendungen, die eine exakte Strahlführung erfordern, von großem Vorteil ist. Die Möglichkeit, die Reflexionsflächen zu verschieben und zu verschwenken, bietet eine hohe Flexibilität bei der Steuerung der Signalrichtung. Dies führt zu einer verbesserten Signalqualität, da unerwünschte Signalverluste und Interferenzen minimiert werden. Darüber hinaus ermöglicht die präzise Steuerung der Reflexionsrichtung eine optimale Anpassung an verschiedene Anforderungen und Einsatzszenarien. Ein weiterer Vorteil dieser bevorzugten Ausgestaltung ist, dass die Flexibilität und Anpassungsfähigkeit der Reflexionsflächen eine vielseitige Nutzung der Reflektoranordnung in unterschiedlichen Anwendungen ermöglicht. Obwohl die tatsächlich erzielbare Orientierung einer Reflexionsfläche durch angrenzende Einrichtungen, wie insbesondere benachbarte Reflektorelemente, beschränkt sein kann, bietet diese Gestaltung dennoch eine erhebliche Verbesserung der Anpassungsfähigkeit und Leistungsfähigkeit der Reflektoranordnung.

Gemäß einer bevorzugten Ausgestaltung der Erfindung sind die Reflektorelemente so orientierbar, dass einander benachbarte Reflektorelemente einander kontaktieren. Es ist möglich, dass die Reflexionsflächen plan sind und mit den Reflexionsflächen der Reflektorelemente eine geschlossene plane Oberfläche bildbar ist. Es können jedoch nicht nur plane Flächen vorgesehen sein. Gekrümmte, schräge, gewundene Flächen sind grundsätzlich auch eine Option. Solche Formen haben den Vorteil, dass diese die Reflexion aufweiten, was für sehr hohe Frequenzen (d. h. sehr kleine Wellenlängen) hilfreich ist. Somit können größere Reflektorelemente verwendet werden und die Gesamtanzahl der Reflektorelemente kann für eine feste Grundfläche minimiert werden. Im Übrigen ist es gemäß einer bevorzugten Weiterbildung der Erfindung vorgesehen, dass wenigstens ein Reflektorelement mit seiner Reflexionsfläche vor bzw. hinter die plane Oberfläche bewegbar ist. Bei einem solchen Herausbewegen einer Reflexionsfläche nach vorne bzw. nach hinten muss von den anderen Reflexionsflächen im Übrigen nicht zwingend eine plane Fläche gebildet werden. Vielmehr können die anderen Reflexionsflächen grundsätzlich beliebig orientiert sein, insbesondere ebenfalls nach vorne oder hinten verfahren oder beliebig geneigt.

Eine planaren Reflexionsflächen bieten den Vorteil, eine gleichmäßige und konsistente Reflexion von Funksignalen zu gewährleisten, was zu einer verbesserten Signalqualität und Richtungspräzision führt. Darüber hinaus kann es vorgesehen sein, dass wenigstens ein Reflektorelement mit seiner Reflexionsfläche vor oder hinter die plane Oberfläche bewegbar ist. Diese Bewegungsmöglichkeit erlaubt es, die Reflexionsfläche eines Reflektorelements nach vorne oder nach hinten zu verschieben, ohne dass die übrigen Reflexionsflächen zwingend eine plane Fläche bilden müssen. Dies bedeutet, dass die anderen Reflexionsflächen beliebig orientiert sein können, sei es ebenfalls nach vorne oder nach hinten verfahren oder in beliebigen Winkeln geneigt. Die Flexibilität, die Reflexionsflächen in verschiedene Richtungen zu bewegen, bietet erhebliche Vorteile. Zum einen ermöglicht sie eine dynamische Anpassung der Reflexionscharakteristik an unterschiedliche Anforderungen und Einsatzbedingungen. Abstände zwischen den Reflektorelementen erlauben es aufgrund von Phasenzusammenhängen bei der Superposition der einzelnen Reflexionsmuster die Reflexion in ausgewählte Richtungen besonders stark zu dämpfen bzw. gegenteilig dies insbesondere in die gewünschte Reflexionsrichtung zu vermeiden. Dies kann besonders nützlich sein in Anwendungen, bei denen eine variable und präzise Steuerung der Signalrichtung erforderlich ist. Zum anderen erhöht diese Anpassungsfähigkeit die Vielseitigkeit der Reflektoranordnung, da sie in einer Vielzahl von Szenarien und für unterschiedliche Zwecke eingesetzt werden kann.

Die Verstelleinrichtungen können auf unterschiedliche Weisen betrieben sein. Gemäß einer bevorzugten Weiterbildung der Erfindung weist jedoch wenigstens ein Teil der Verstelleinrichtungen einen Stellmotor oder eine Mehrzahl von Stellmotoren auf. Die Stellmotoren ermöglichen eine präzise und kontrollierte Anpassung der Orientierung der Reflexionsflächen, was die Flexibilität und Genauigkeit der Signalreflexion erhöht.

Eine alternative bevorzugte Ausgestaltung der Erfindung sieht vor, dass wenigstens ein gemeinsamer Stellmotor vorgesehen ist, der gleichzeitig an eine Mehrzahl von Reflexionsflächen angekoppelt ist. In diesem Zusammenhang ist es ganz besonders bevorzugt, dass zwischen den gemeinsamen Stellmotor und den gleichzeitig an diesen angekoppelten Reflexionsflächen eine Übertragungsmechanik, vorzugsweise eine Hydraulik- oder Zahnradkonstruktion, geschaltet ist. Diese Übertragungsmechanik ermöglicht eine effiziente und gleichzeitige Anpassung mehrerer Reflexionsflächen durch einen einzigen Motor. Dadurch wird die Komplexität des Systems verringert, da weniger Motoren benötigt werden, was sowohl die Kosten als auch den Energieverbrauch reduziert und damit die Möglichkeit einer autarken Realisierung bereitstellt.

Der Einsatz von Stellmotoren, ob individuell oder gemeinsam, bietet eine hohe Präzision bei der Steuerung der Reflexionsflächen. Dies führt zu einer verbesserten Signalqualität und ermöglicht eine flexible Anpassung an unterschiedliche Anforderungen und Bedingungen. Die Übertragungsmechanik stellt sicher, dass die Bewegungen des gemeinsamen Stellmotors gleichmäßig und zuverlässig auf die Reflexionsflächen übertragen werden, wodurch eine koordinierte und effiziente Steuerung der Signalrichtung gewährleistet wird. Insgesamt bietet diese bevorzugte Ausgestaltung der Erfindung erhebliche Vorteile in Bezug auf Flexibilität, Effizienz und Kostenersparnis. Durch den Einsatz von Stellmotoren und geeigneten Übertragungsmechaniken kann die Reflektoranordnung gut an verschiedene Einsatzszenarien angepasst werden.

Grundsätzlich kann der den Reflexionsflächen abgewandten Bereich hinter den Reflektorelementen beliebig ausgestaltet sein. Gemäß einer bevorzugten Weiterbildung der Erfindung ist jedoch auf der den Reflexionsflächen abgewandten Seite der Reflektorelemente eine Absorberfläche zur Dämpfung von an den Reflexionsflächen vorbeitretenden Funksignalanteilen angeordnet. Diese Absorberfläche hat mehrere wichtige Funktionen und bietet wesentliche Vorteile. Die Hauptfunktion der Absorberfläche besteht darin, unerwünschte Funksignalanteile, die nicht direkt an den Reflektorelementen reflektiert werden, zu absorbieren. Dies verhindert, dass diese Signalanteile zurück in den Signalpfad gelangen und dort Interferenzen verursachen. Ohne die Absorberfläche könnten die vorbeitretenden Funksignale an anderen Strukturen innerhalb der Antenne reflektiert werden, was zu Mehrfachreflexionen und damit zu Signalverlusten und Interferenzen führen würde. Die Absorberfläche verhindert diese Mehrfachreflexionen effektiv. Die Absorberfläche kann einen elektromagnetischen und/oder einen akustischen Absorber bereitstellen, um auf diese Weise jegliche Form unerwünschter Emissionen zu reduzieren.

Zum einen wird somit die Qualität des reflektierten Hauptsignals verbessert, da die Dämpfung unerwünschter Signalanteile zu einer klareren und stärkeren Signalübertragung führt. Zum anderen wird die Interferenz zwischen dem Hauptsignal und den unerwünschten Signalanteilen minimiert, was zu einer stabileren und zuverlässigeren Kommunikation beiträgt. Außerdem wird die Effizienz insgesamt gesteigert, da weniger Energie durch unerwünschte Reflexionen verloren geht, was zu einer besseren Leistung und Reichweite führt. Schließlich erhöht die Dämpfung der nicht in die gewünschte Richtung reflektierten Signalanteile die Richtwirkung der Reflexion, was besonders in Anwendungen wichtig ist, bei denen eine präzise Strahlführung erforderlich ist.

Gemäß einer bevorzugten Weiterbildung der Erfindung ist auf der den Reflexionsflächen abgewandten Seite der Reflektorelemente zumindest teilweise zwischen jeweils zwei Reflektorelementen jeweils ein Subreflektorelement mit einer Subreflexionsfläche angeordnet, wobei die Subreflektorelemente jeweils eine Verstelleinrichtung aufweisen und wobei eine jeweilige Subreflexionsfläche so ausgestaltet ist, dass ein aus einer Einfallsrichtung einfallendes Funksignal in einen Ausfallsrichtungsbereich reflektiert wird, und eine jeweilige Verstelleinrichtung derart an eine jeweilige Subreflexionsfläche angekoppelt ist, dass mit der Verstelleinrichtung die Orientierung der Subeflexionsfläche reversibel derart veränderbar ist, dass das aus der Einfallsrichtung einfallende Funksignal je nach Orientierung der Subreflexionsfläche jeweils in einen anderen Ausfallsrichtungsbereich reflektiert wird.

Diese Anordnung bietet mehrere wesentliche Funktionen und Vorteile. Die Subreflektorelemente erweitern die Flexibilität und Präzision der Signalsteuerung, da sie zusätzliche Reflexionsebenen bereitstellen, die fein abgestimmt werden können. Dies führt zu einer verbesserten Signalqualität und ermöglicht eine präzisere Steuerung der Signalrichtung, nicht zuletzt auch weil unkontrollierte Interferenzen vermieden werden. Durch die reversible Veränderbarkeit der Orientierung der Subreflexionsflächen können die Subreflektorelemente dynamisch auf verschiedene Signalquellen und Empfangsrichtungen reagieren, was eine flexible Anpassung an unterschiedliche Kommunikations- und Radarszenarien ermöglicht. Ein weiterer Vorteil dieser Ausgestaltung ist die erhöhte Effizienz und Vielseitigkeit der Reflektoranordnung. Die zusätzliche Reflexionsebene, die durch die Subreflektorelemente bereitgestellt wird, ermöglicht eine feinere Abstimmung und Optimierung der Signalwege. Dies kann insbesondere in komplexen Anwendungen von Vorteil sein, bei denen eine hohe Präzision und Anpassungsfähigkeit erforderlich sind. Die Möglichkeit, die Orientierung der Subreflexionsflächen reversibel zu verändern, stellt sicher, dass die Reflektoranordnung flexibel und vielseitig einsetzbar bleibt, ohne dass die Gesamtstruktur der Reflektoren geändert werden muss.

Weiterhin ist gemäß einer bevorzugten Ausgestaltung der Erfindung vorgesehen, dass wenigstens ein Reflektorelement ein Reflexionsflächenvergrößerungselement aufweist, mit dem die Reflexionsfläche des Reflektorelements reversibel vergrößerbar ist. Diese Gestaltung ermöglicht es, die effektive Fläche der Reflexionsfläche bei Bedarf zu erweitern und somit die Menge des reflektierten Funksignals zu erhöhen. Die Hauptfunktion dieses Reflexionsflächenvergrößerungselements besteht also darin, die Reflexionsfläche eines Reflektorelements zu vergrößern, um insbesondere eine Signalreflexion auch dort zu erreichen, wo ansonsten durch z. B. eine Neigung der Reflexionsfläche kein Bereich der Reflexionsfläche im Strahlengang des Funksignals angeordnet wäre. Durch die reversible Vergrößerbarkeit kann die Reflexionsfläche flexibel an die jeweiligen Anforderungen angepasst werden.

Zum einen ermöglicht die variable Größe der Reflexionsfläche also eine präzise Steuerung der reflektierten Signalstärke. Dies führt zu einer verbesserten Signalqualität und einer höheren Effizienz der Reflektoranordnung. Zum anderen bietet die reversible Vergrößerbarkeit der Reflexionsfläche eine hohe Flexibilität, da die Reflektorelemente schnell und einfach an unterschiedliche Betriebsbedingungen angepasst werden können. Dies erhöht die Vielseitigkeit der Reflektoranordnung. Darüber hinaus trägt die Möglichkeit, die Reflexionsfläche zu vergrößern, zur Verbesserung der gesamten Systemleistung bei, indem sie die Signalstärke erhöhen und Signalverluste minimieren kann.

In diesem Zusammenhang ist es ganz besonders bevorzugt, dass das Reflexionsflächenvergrößerungselement reversibel aus dem Bereich der Reflexionsfläche herausbewegbar und in diesen wieder hereinbewegbar ist.

Nachfolgend wird die Erfindung anhand bevorzugter Ausführungsbeispiele unter Bezugnahme auf die Zeichnungen weiter im Detail erläutert.

In den Zeichnungen zeigen
- Fig. 1: schematisch eine Reflektoranordnung gemäß einem Ausführungsbeispiel der Erfindung,
- Fig. 2: schematisch ein Reflektorelement gemäß einem Ausführungsbeispiel der Erfindung,
- Fig. 3a und 3b: schematisch die Reflektorelemente einer Reflektoranordnung gemäß einem Ausführungsbeispiel der Erfindung in verschiedenen Orientierungen der Reflexionsflächen,
- Fig. 4: verschiedene geometrische Ausgestaltungen der Reflexionsflächen,
- Fig. 5: schematisch ein Reflektorelement gemäß einem Ausführungsbeispiel der Erfindung mit einer einen Stellmotor aufweisenden Verstelleinrichtung,
- Fig. 6: schematisch eine Reflektoranordnung gemäß einem Ausführungsbeispiel der Erfindung mit einem Getriebekonzept,
- Fig. 7a und 7b: Details des Getriebekonzepts aus Fig. 6,
- Fig. 8a und 8b: schematisch eine Reflektoranordnung gemäß einem Ausführungsbeispiel der Erfindung mit einer Absorberfläche,
- Fig. 9a und 9b: schematisch eine Reflektoranordnung gemäß einem Ausführungsbeispiel der Erfindung mit Reflexionsflächenvergrößerungselementen,
- Fig. 10a und 10b: schematisch eine Reflektoranordnung gemäß einem Ausführungsbeispiel der Erfindung mit Subreflektorelementen und
- Fig. 11: schematisch eine Reflektoranordnung gemäß einem Ausführungsbeispiel der Erfindung verstellbaren Rotationspunkten der Verstelleinrichtungen.

Die erfindungsgemäße Reflektoranordnung dient insbesondere zur Verbesserung der Abdeckung von Mobilfunknetzen in dynamisch veränderlichen Umgebungen lässt sich durch verschiedene Ausführungsbeispiele umsetzen. Diese Beispiele demonstrieren die Vielseitigkeit und Anpassungsfähigkeit der Erfindung in unterschiedlichen Anwendungsszenarien und bieten umfassende Lösungen für die effiziente Nutzung in modernen Mobilfunknetzen.

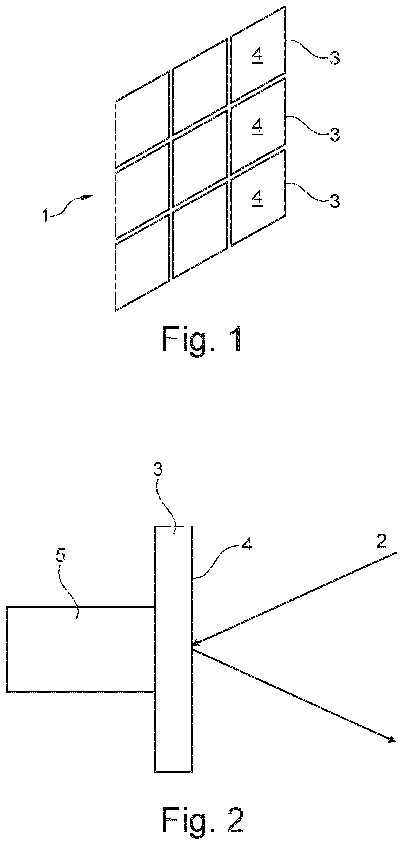

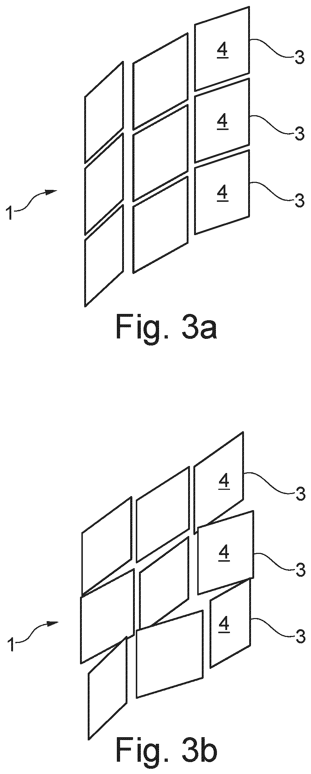

Ein zentrales Ausführungsbeispiel der Erfindung ist die modularisierte Konstruktion der Reflektoren. Wie aus Fig. 1 ersichtlich, ist eine Reflektoranordnung 1 vorgesehen, die zum Reflektieren eines Funksignals 2 dient und dazu mit einer Mehrzahl von nebeneinander angeordneten Reflektorelementen 3 ausgestattet ist. Wie aus Fig. 2 ersichtlich, die schematisch ein Reflektorelement 3 zeigt, weisen die Reflektorelemente 3 jeweils eine Reflexionsfläche 4 und jeweils eine Verstelleinrichtung 5 auf. Dabei ist eine jeweilige Reflexionsfläche 4 derart ausgestaltet ist, dass ein aus einer Einfallsrichtung einfallendes Funksignal 2 in einen reflektiert wird, und eine jeweilige Verstelleinrichtung 5 ist derart an eine jeweilige Reflexionsfläche 4 angekoppelt, dass mit der Verstelleinrichtung 5 die Orientierung der Reflexionsfläche 4 reversibel derart veränderbar ist, dass das aus der Einfallsrichtung einfallende Funksignal 2 je nach Orientierung der Reflexionsfläche 4 jeweils in eine anderen Ausfallsrichtungsbereich reflektiert wird. Solche unterschiedlichen Orientierungen der Reflexionsflächen sind exemplarisch in den Fig. 3a und 3b gezeigt.

Die Reflektoranordnung 1 ist also in verstellbare Einzelelemente aufgeteilt, wodurch eine Skalierbarkeit auf große Flächen an einzelnen Standorten ermöglicht wird. Diese Modularisierung erleichtert die Verteilung auf verschiedene verfügbare Flächen an mehreren Standorten und gestattet die einfache Nachrüstung, Wartung und den Austausch der Einzelelemente. Dieser Ansatz trägt wesentlich zur Nachhaltigkeit bei, da die Reflektorelemente 3 flexibel angepasst und im Bedarfsfall leicht ersetzt oder gewartet werden können.

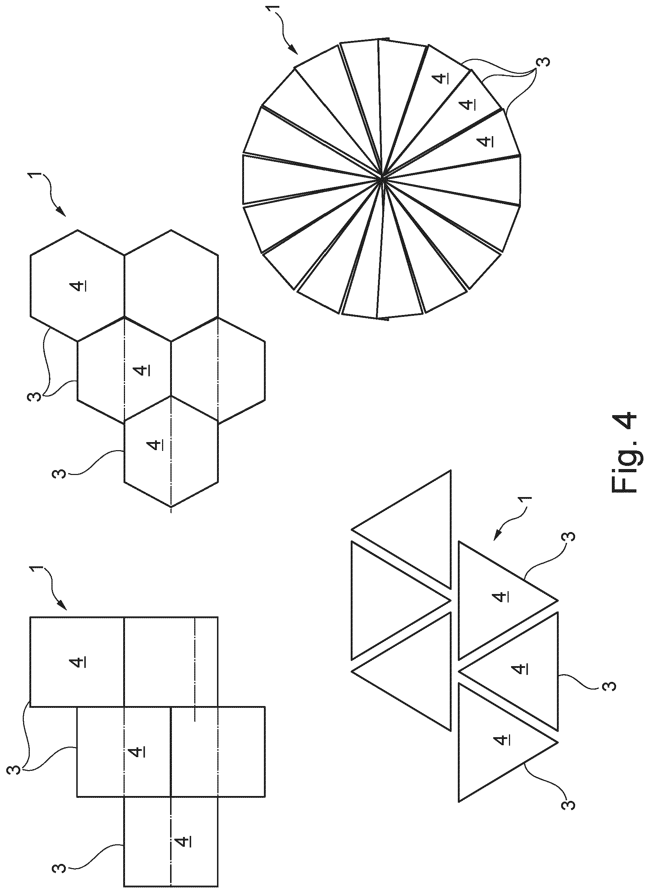

Ein weiteres Ausführungsbeispiel umfasst die Verwendung unterschiedlicher Oberflächengeometrien und Materialien für die Reflektorelemente 3. Diese können verschiedene Formen wie gerade, gekrümmte, rechteckige, quadratische, hexagonale oder dreieckige Geometrien aufweisen, wie exemplarisch in Fig. 4 dargestellt. Dabei müssen die Reflektorelemente 3 einer Reflektoranordnung 1 auch nicht alle die selbe Form haben. Vielmehr sind auch Reflektorelemente 3 mit heterogener Größe, Form und Anordnung möglich. Zudem können die Reflektorelementen 3 aus unterschiedlichen Materialien bestehen, wie etwa aus normaler Reflexionsbeschichtung oder durchsichtigem Metamaterial. Diese Flexibilität erlaubt die Anpassung der Reflektorelemente 3 an verschiedene ästhetische und funktionale Anforderungen. Beispielsweise können die Reflektorelementen 3 in Kombination mit Photovoltaikanlagen eingesetzt werden, um sowohl die Energiegewinnung als auch die Signalreflexion zu optimieren, oder sie können als Werbeflächen genutzt werden. Darüber hinaus können auch großflächige Fensterfassaden mitbenutzt werden.

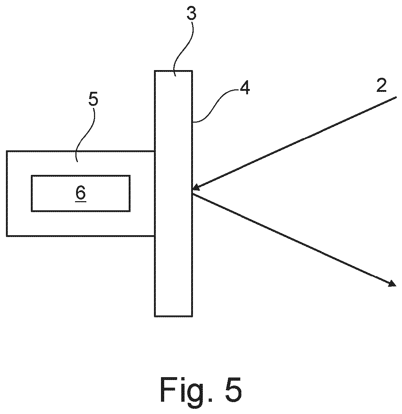

Die Rekonfigurationsmöglichkeiten der Reflektoranordnung 1 ist ein weiteres Schlüsselelement der Erfindung. Diese können grundsätzlich durch die mechanische Anpassung der Neigung, Höhe und/oder Krümmung der Reflektorelementen 3 innerhalb des Reflektorfeldes realisiert werden. Dabei sind unterschiedliche Antriebskonzepte denkbar, je nach erforderlicher Geschwindigkeit der Anpassung. Schnelle Rekonfigurationen , z. b. für mobile Nutzer, können, wie schematisch in Fig. 5 dargestellt, durch den Einsatz von individuellen Stellmotoren 6 erreicht werden, die eine präzise und zügige Anpassung einer jeweiligen Reflexionsfläche 4 ermöglichen. Elektrisch betriebene Stellmotoren 6 können jede Reflexionsfläche 4 individuell ausrichten und sind besonders für dynamisches Nachführen während des Betriebs geeignet. Diese Stellmotoren 6 ermöglichen eine schnelle und exakte Ausrichtung der Reflexionsflächen 4, benötigen jedoch kontinuierlich Energie und eine große Anzahl von Stellmotoren 6, nämlich jeweils einen pro Reflektorelement 3, was zu einem höheren Aufwand führt.

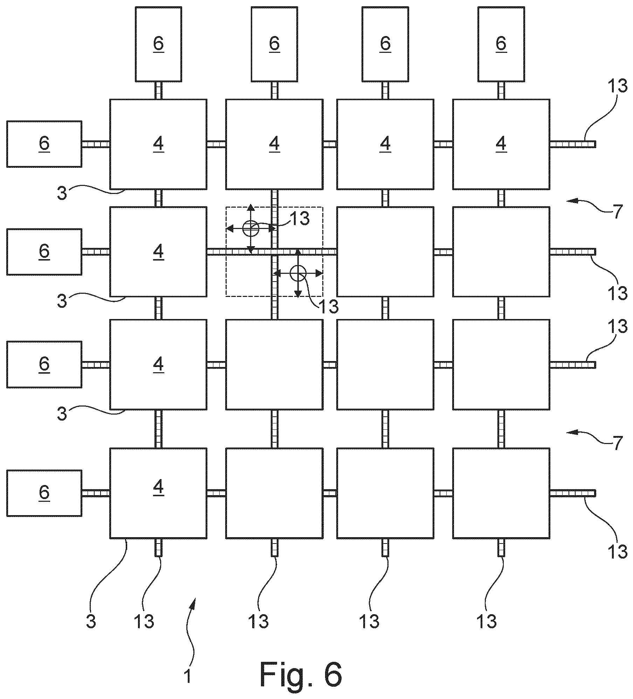

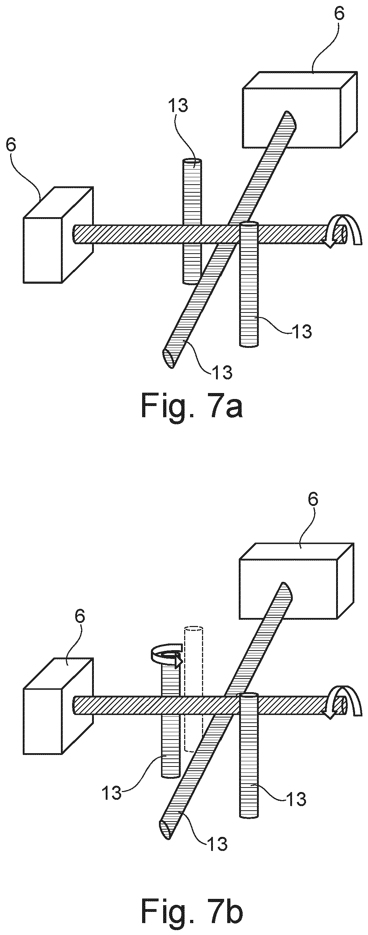

Eine alternative Methode ist die Nutzung einer geringeren Anzahl an Stellmotoren 6 in Kombination mit Getriebekonzepten. In dem in Fig. 6 dargestellten Fall werden im Rahmen einer Übertragungsmechanik 7 dynamisch angesteuerte Kupplungen verwendet, um die einzelnen Reflexionsflächen 4 über Gewindestangen 13 anzusteuern. Dieses Konzept reduziert die Anzahl der benötigten Stellmotoren 6 und ermöglicht dennoch eine präzise Steuerung der Reflexionsflächen 4. Wie in Fig. 6 dargestellt, können 16 Reflexionsflächen 4 mit nur acht Stellmotoren 6 betrieben werden, was die Komplexität und den Energiebedarf reduziert. In den Fig. 7a und 7b ist gezeigt, wie vertikal stehende Gewindestangen 13, die als Zweiachssteuerung für die Ausrichtung der Reflexionsflächen 4 dienen, an eine an einen Stellmotor 6 angeschlossenen Gewindestangen 13 an- (Fig. 7a) bzw. abgekoppelt (Fig. 7b) werden, um die Reflexionsfläche 4 zu manipulieren bzw. im abgekoppelten Zustand in ihrer einngestellten Orientierung zu belassen.

Wenn eine langsame Anpassung ausreichend ist, wie beispielsweise bei langfristigen Änderungen der Umgebung, wie bei einem fortschreitenden Neubau eines Hochhauses, können reduzierte Antriebskonzepte wie Hydraulik- oder Zahnradkonstruktionen verwendet werden. Diese Mechanismen ermöglichen eine flexible und bedarfsgerechte Anpassung der Reflexionscharakteristik, wodurch die Effizienz und Präzision der Signalsteuerung verbessert wird.

Die Kommunikation und Energieversorgung der Rekonfigurationsmechanismen ist ein weiterer wichtiger Aspekt der Erfindung. Die Ansteuerung der Rekonfigurationsfunktion kann beispielsweise über einen Kommunikationskanal eines Mobilfunknetzes erfolgen, der im Normalbetrieb durch die Reflektoranordnung 1 umgelenkt wird, oder über separate Funkkanäle. Diese verschiedenen Kommunikationsansätze ermöglichen eine effiziente und kostengünstige Steuerung der Reflektorelemente. Zur Energieversorgung der Rekonfigurationsmechanismen wird vorzugsweise Energy Harvesting genutzt, wobei beispielsweise auch Photovoltaikmodule in die Reflektorelemente 3 integriert werden können. Durch die Verwendung transparenter Reflexionsfolien ist es möglich, die Photovoltaikmodule platzsparend direkt hinter den Reflektorelemente 3 zu platzieren. Alternativ kann die notwendige Energie auch durch Wireless Power Transfer bereitgestellt werden, was die Flexibilität und Autarkie der Systeme weiter erhöht.

Ein besonders innovativer Ansatz der Erfindung liegt in der Nutzung von Digitalen Zwillingen zur Ermittlung des Rekonfigurationsbedarfs. Diese realitätsnahen und aktuellen Modelle der Zielumgebung arbeiten in enger Wechselwirkung mit einer Beam Steering Funktion des Gesamtsystems. Sie antizipieren den Bedarf an Rekonfiguration und setzen diese frühzeitig um, um eine kontinuierliche Anpassung und einen reibungslosen Betrieb z. B. eines Mobilfunknetzes zu gewährleisten. Durch fortlaufend erzeugte Radio Environmental Maps (REM) kann der Rekonfigurationsbedarf ermittelt und die Berechnung einer geeigneten Rekonfiguration kann über Optimierungsverfahren, wie evolutionäre Algorithmen in Kombination mit Ausbreitungsmodellen, erfolgen. Besonders ressourceneffizient ist der Einsatz alternativer analytischer Modelle.

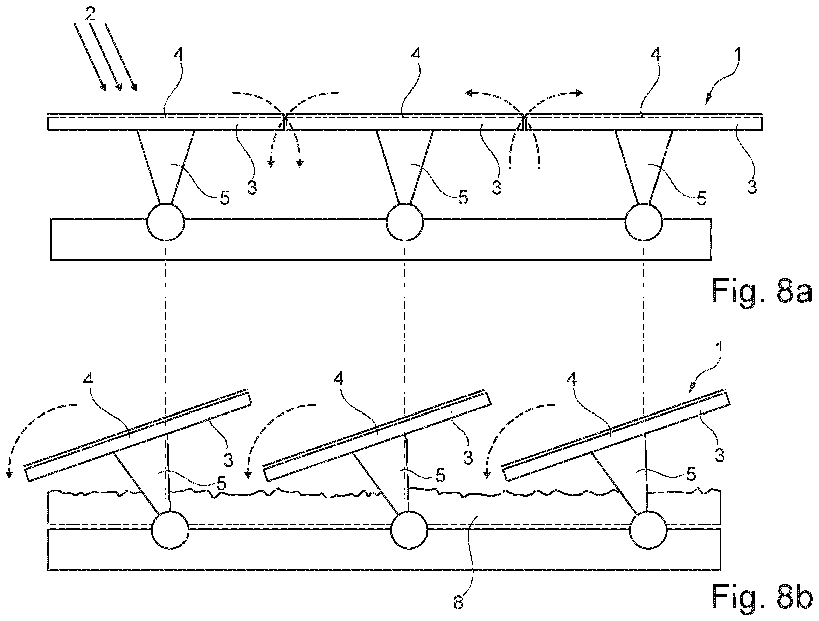

Ein weiterer besonders bevorzugter Aspekt liegt in der Konstruktion der Reflexionsflächen 4 derart, dass Kollisionen zwischen einander benachbarten Reflektorelementen 3 vermieden werden. Dies ist schematisch in den Fig. 8a und 8b dargestellt. Die Reflektorelemente 3 sind eng nebeneinander angeordnet, so dass sie sich berühren können, um so eine maximale Abdeckung und Flächennutzungseffizienz zu erzielen. Ein Kollisionsvermeidungsalgorithmus (KVA) kann hierbei eine zentrale Rolle spielen. Dieser Algorithmus neigt die Reflexionsflächen 4 in einer gestaffelten Reihenfolge, um sicherzustellen, dass keine Kollisionen auftreten. Der KVA arbeitet in dem vorliegenden Beispiel in enger Wechselwirkung mit einem Algorithmus zur funkfeldabhängigen Neigungskonfiguration der Reflexionsflächen 4. Falls eine kollisionsfreie Neigung nicht möglich ist, werden alternative Lösungen wie die Umverteilung oder Neugestaltung der Reflexionsflächenkonfiguration verfolgt.

Fig. 8b ist im Übrigen entnehmbar, dass hinter den Reflektorelementen 3 eine Absorberfläche 8 angeordnet ist. Diese Absorberfläche 8 dient zur Dämpfung von an den Reflexionsflächen 4 vorbeireitenden Funksignalanteilen 2, so dass von der Absorberfläche 8 praktisch kaum Reflexionen ausgehen und es damit zu praktisch keinen Interferenzen bei dem reflektierten Funksignal kommt.

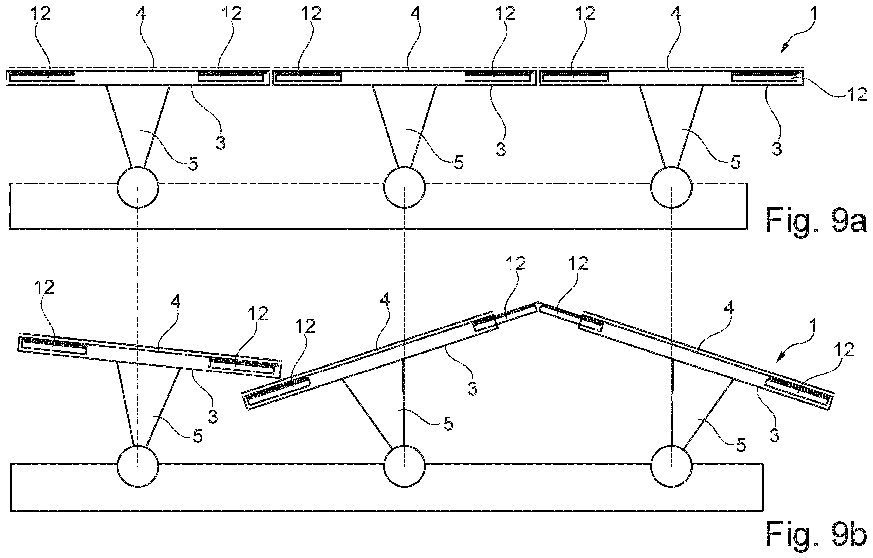

Zusätzlich können, wie in den Fig. 9a und 9b dargestellt, Reflexionsflächenvergrößerungselemente 12 vorgesehen sein, die bei Bedarf aus- und eingefahren werden können. Diese Reflexionsflächenvergrößerungselemente 12 vergrößern die effektive Reflexionsoberfläche bei Bedarf und schließen entstehende Lücken in der Gesamtreflexionsfläche. Beispielsweise können als Reflexionsflächenvergrößerungselemente 12 dünne Reflexionsfolien eingesetzt werden, die bei Bedarf ausgefahren werden, um eine kontinuierliche und gleichmäßige Reflexion zu gewährleisten. Diese flexiblen Strukturen können auch partiell geneigt oder gekrümmt werden, um die Reflexionseigenschaften weiter anzupassen.

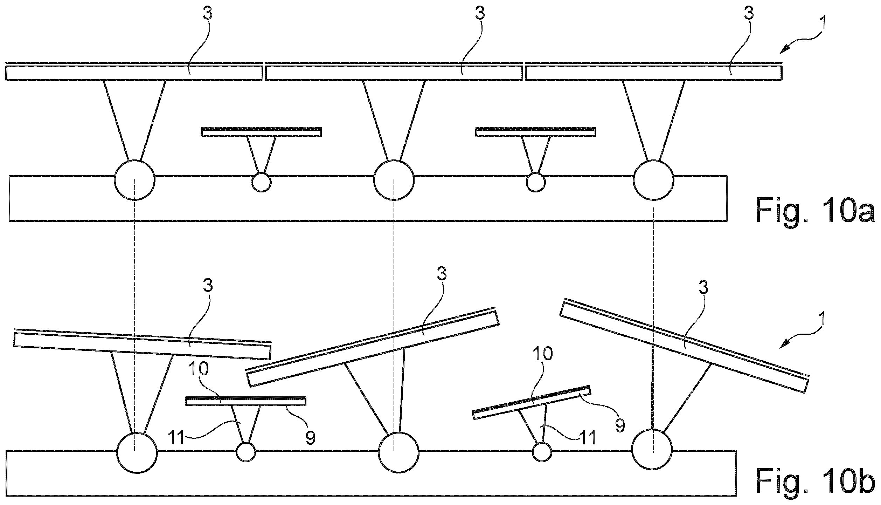

Eine weitere Ergänzung ist die Integration von Subreflektorelementen 9 mit Subreflexionsflächen 10, wie exemplarisch in den Fig. 10a und 10b dargestellt. Die damit gebildete zusätzliche Reflexionsebenen dient dazu, Lücken zwischen zwei Reflektorelementen 3 zu schließen und eine gleichmäßige Abdeckung zu gewährleisten. Die Subreflektorelemente 9 können mittels Verstelleinrichtungen 11 ebenfalls geneigt werden und sind so konstruiert, dass sie potenzielle Kollisionssituationen vermeiden, was durch einen erweiterten Kollisionsvermeidungsalgorithmus (KVA) unterstützt wird.

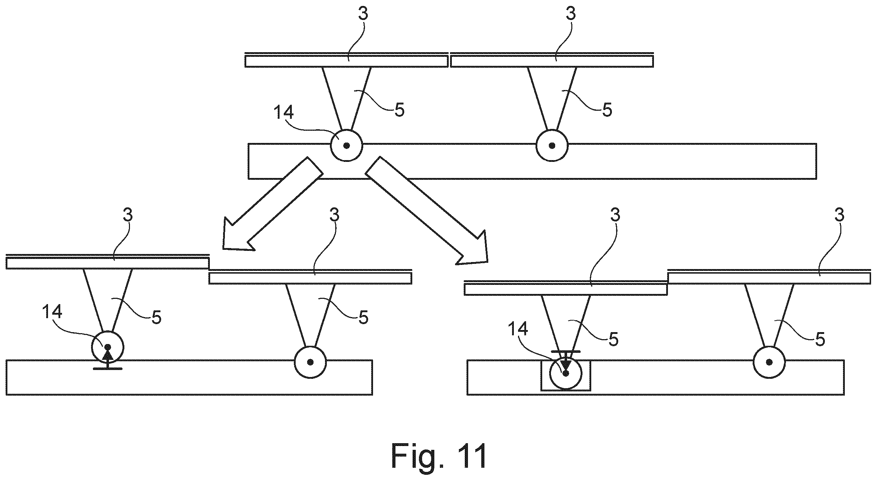

Ein weiteres technisches Konzept zur Vermeidung von Kollisionen ist die dynamische Lagerung des Rotationspunktes 14 der Reflexionsflächen 4. Dies ist exemplarisch in Fig. 11 dargestellt, die zeigt, dass der Rotationspunkt 14 nach oben und nach unten verschoben werden kann. Genauso ist auch eine Verschiebung nach links und rechts bzw. vorne und hinten möglich. Diese Lagerung ermöglicht eine flexible Anpassung der Orientierung des Reflektorelements 3, wodurch kollisionsfreie Bewegungen der Reflexionsflächen 4 gewährleistet werden. Diese dynamische Anpassung optimiert die Nutzung des verfügbaren Raums und erhöht die Effizienz der Reflexionsflächen 4.

Die dieser Patentanmeldung zu Grunde liegende Erfindung entstand in einem Projekt, welches unter dem Förderkennzeichen D-11-43345-001-081071 ("6GEM") vom BMBF gefördert wurde.

### Bezugszeichenliste

- 1: Reflektoranordnung
- 2: Funksignal
- 3: Reflektorelement
- 4: Reflexionsfläche
- 5: Verstelleinrichtung
- 6: Stellmotor
- 7: Übertragungsmechanik
- 8: Absorberfläche
- 9: Subreflektorelement
- 10: Subreflexionsfläche
- 11: Verstelleinrichtung eines Subreflektorelements
- 12 13: Reflexionsflächenvergrößerungselement Gewindestangen
- 14: Rotationsachse

## Patentansprüche

1. Reflektoranordnung (1), zum Reflektieren eines Funksignals (2), mit einer Mehrzahl von nebeneinander angeordneten Reflektorelementen (3), die jeweils eine Reflexionsfläche (4) und von denen wenigstens ein Teil jeweils eine Verstelleinrichtung (5) aufweisen, wobei
eine jeweilige Reflexionsfläche (4) so ausgestaltet ist, dass ein aus einer Einfallsrichtung einfallendes Funksignal (2) in einen Ausfallsrichtungsbereich reflektiert wird, und
eine jeweilige Verstelleinrichtung (5) derart an eine jeweilige Reflexionsfläche (4) angekoppelt ist, dass mit der Verstelleinrichtung (5) die Orientierung der Reflexionsfläche (4) reversibel derart veränderbar ist, dass das aus der Einfallsrichtung einfallende Funksignal (2) je nach Orientierung der Reflexionsfläche (4) jeweils in eine anderen Ausfallsrichtungsbereich reflektiert wird.

2. Reflektoranordnung (1) nach Anspruch 1, wobei wenigstens ein Teil der Verstelleinrichtungen (5) so ausgebildet ist, dass mit ihnen die an sie jeweils angekoppelte Reflexionsfläche (4) verschiebbar und/oder verschwenkbar ist.

3. Reflektoranordnung (1) nach Anspruch 1 oder 2, wobei die Reflektorelemente (3) so orientierbar sind, dass einander benachbarte Reflektorelemente (3) einander kontaktieren.

4. Reflektoranordnung (1) nach einem der vorhergehenden Ansprüche, wobei die Reflexionsflächen (4) plan sind und mit den Reflexionsflächen (4) der Reflektorelemente (3) eine geschlossene plane Oberfläche bildbar ist.

5. Reflektoranordnung (1) nach einem der vorhergehenden Ansprüche, wobei wenigstens ein Teil der Verstelleinrichtungen (5) wenigstens einen Stellmotor (6), vorzugsweise eine Mehrzahl von Stellmotoren (6), aufweist.

6. Reflektoranordnung (1) nach einem der vorhergehenden Ansprüche, wobei wenigstens ein gemeinsamer Stellmotor (6) vorgesehen ist, der gleichzeitig an eine Mehrzahl von Reflexionsflächen (4) angekoppelt ist.

7. Reflektoranordnung (1) nach Anspruch 6, wobei zwischen den gemeinsamen Stellmotor (6) und den gleichzeitig an diesen angekoppelten Reflexionsflächen (4) eine Übertragungsmechanik (7), vorzugsweise eine Hydraulik- oder Zahnradkonstruktion, geschaltet ist.

8. Reflektoranordnung (1) nach einem der vorhergehenden Ansprüche, wobei auf der den Reflexionsflächen (4) abgewandten Seite der Reflektorelemente (3) eine Absorberfläche (8) zur Dämpfung von an den Reflexionsflächen (4) vorbeitretenden Funksignalanteilen (2) angeordnet ist.

9. Reflektoranordnung (1) nach einem der vorhergehenden Ansprüche, wobei auf der den Reflexionsflächen (4) abgewandten Seite der Reflektorelemente (3) zumindest teilweise zwischen jeweils zwei Reflektorelementen (3) jeweils ein Subreflektorelement (9) mit einer Subreflexionsfläche (10) angeordnet ist, wobei die Subreflektorelemente (9) jeweils eine Verstelleinrichtung (11) aufweisen und wobei eine jeweilige Subreflexionsfläche (10) so ausgestaltet ist, dass ein aus einer Einfallsrichtung einfallendes Funksignal (2) in einen Ausfallsrichtungsbereich reflektiert wird, und eine jeweilige Verstelleinrichtung (11) derart an eine jeweilige Subreflexionsfläche (10) angekoppelt ist, dass mit der Verstelleinrichtung (11) die Orientierung der Subreflexionsfläche (10) reversibel derart veränderbar ist, dass das aus der Einfallsrichtung einfallende Funksignal (2) je nach Orientierung der Subreflexionsfläche (10) jeweils in einen anderen Ausfallsrichtungsbereich reflektiert wird.

10. Reflektoranordnung (1) nach einem der vorhergehenden Ansprüche, wobei wenigstens ein Reflektorelement (3) ein Reflexionsflächenvergrößerungselement (12) aufweist, mit dem die Reflexionsfläche (4) des Reflektorelements (3) reversibel vergrößerbar ist.
